# EUROPEAN PATENT APPLICATION

(11) **EP 4 480 925 A1**
(43) Date of publication of application: **25.12.2024**
(21) Application number: 24180675.1
(22) Date of filing: 07.06.2024
(51) Int. Cl.: C02F 1/467, C02F 1/469, C02F 11/08, C10G 1/00, C10L 9/08, C25B 1/04, C25B 1/26, B09B 3/40, C02F 1/461

(54) **A METHOD AND A DEVICE FOR HYDROTHERMALLY TREATING CARBON-CONTAINING MATERIAL**

(30) Priority: 21.06.2023 FI 20235698
(71) Applicant: Valmet Technologies Oy, 02150 Espoo (FI)
(72) Inventor: JORONEN, Tero, 33900 TAMPERE (FI)
(74) Representative: Berggren Oy

(57) **Abstract**

A method for hydrothermally treating feedstock (FS) comprising carbon-containing material. The method comprises supplying the feedstock (FS) and a first aqueous fraction (A1) to a reactor (150) and holding the feedstock (FS) and the first aqueous fraction (A1) in the reactor (150) in a high pressure and at an elevated temperature to hydrothermally treat the feedstock (FS) for forming intermediate product (IP). A product fraction (PF) and a second aqueous fraction (A2) are separated from the intermediate product (IP), and the second aqueous fraction (A2) is conveyed to an electrochemical purifier (200). The method comprises producing chlorine (Cl₂) and/or hypochlorous acid (HClO) in a first cell (210) of the electrochemical purifier (200) by applying a first and second voltages (V1, V2) to an anode (212) and a cathode (222), respectively. The method comprises utilising at least part of a third aqueous fraction (A3) to improve the separation of the product fraction (PF) and the second aqueous fraction (A2) from the intermediate product (IP), wherein the third aqueous fraction (A3) is arranged in the first cell (210). A device for the same.

## Description

### Technical field

The invention relates to methods and devices for hydrothermally treating carbon-containing material. The invention relates to methods and devices for hydrothermally treating carbon-containing material such that consumption of water is reduced. The invention relates electrochemical purification of industrial wastewaters. The invention relates electrochemical purification of wastewater of an industrial process for the purpose of recycling the water into the same industrial process.

### Background

For environmental reasons renewable energy sources are needed. Carbon-containing material, such as biomass, e.g. lignocellulosic material, refuse-derived fuel (RDF) and/or solid recovered fuel (SRF), is probably the most widely used source of renewable energy. It is known to hydrothermally treat carbon-containing material to obtain biofuel, sometimes called biocrude or bio-oil. In the hydrothermal treatment, the carbon-containing material is maintained for some time in a high pressure and at an elevated temperature for a period. The pressure and temperature may be a few hundred bars and a few hundred degrees Celsius, respectively. From the hydrothermal treatment of the carbon-containing material, in addition to the biofuel, also an aqueous phase is obtained; they are both separated from the reaction product of the hydrothermal treatment. However, the process requires a lot of water. There is therefore a need to decrease the water consumption.

### Summary

To reduce the water consumption, an attempt was made to recycle the aqueous phase to the process. However, it was realized that oftentimes the aqueous phase comprises a lot of chloride ions, which promote corrosion of the equipment, when recycled.

To solve this problem, the inventor realized that by using an electrochemical purifier to purify the aqueous phase, the amount of chloride ions can be reduced. Namely, the chloride ions (Cl⁻) oxidize near at the anode of the electrochemical purifier to form chlorine gas (Cl₂) at least at certain process conditions. Thus, the amount of the corrosive chloride ions is reduced, and the water can be recycled with less corrosion problems. In the alternative, the amount of the corrosive chloride ions can be reduced by producing hypochlorous acid in a first cell and recycling aqueous solution from another cell of the electrochemical purifier. In addition, in some embodiments of the invention, sodium and potassium ions are also purified from the aqueous phase. Thus, the method is usable also when an alkali content of the feedstock is reasonably high.

The inventor also found that a low pH promotes the production of chlorine gas near the anode. In order to reduce pH near the anode, the electrochemical purifier comprises an ion exchange membrane to prevent mixing of a low-pH part of the electrolyte (i.e. the aqueous phase to be purified and/or at least partly purified) with a high-pH part of the electrolyte, which are formed by the electrolysis.

The inventors have found that the aqueous fraction of the same cell that comprises the anode can be utilized to improve the separation of a product fraction and the aqueous phase from an intermediate product comprising polar compounds and non-polar compounds. This can be done irrespective of otherwise recycling aqueous fractions within the process.

The invention is disclosed in more specific terms in the independent claims 1 and 11. Dependent claims disclose preferable embodiments. The disclosure and figures explain these and other embodiments.

### Brief description of the drawings

- Fig. 1: is a schematic view of an embodiment of a method and a device for hydrothermally treating carbon-containing material, the method including recycling a recyclable aqueous fraction AR comprising at least a part of a third aqueous fraction A3,
- Fig. 2: is a schematic view of an embodiment of a method and a device for hydrothermally treating carbon-containing material, the method including recycling at least a part of a fourth aqueous fraction A4,
- Fig. 3: is a schematic view of an embodiment of a method and a device for hydrothermally treating carbon-containing material, the method including refining the product fraction PF,
- Fig. 4: is a schematic view of an embodiment of a method and a device for hydrothermally treating carbon-containing material, the method including separating carbon dioxide,
- Fig. 5a: is a schematic view of an embodiment of an electrochemical purifier usable in the method and the device for purifying the second aqueous phase, the electrochemical purifier comprising an anion-exchange membrane and a cation-exchange membrane,
- Fig. 5b: is a schematic view of an embodiment of an electrochemical purifier usable in the method and the device for purifying the second aqueous phase, the electrochemical purifier comprising two anion-exchange membranes and two cation-exchange membranes,
- Fig. 6a: is a schematic view of an embodiment of a method and a device for hydrothermally treating carbon-containing material, the method including mixing the feedstock with an aqueous fraction in a mixer and heating the mixture in a heater before feeding the heated mixture to a reactor for the hydrothermal treatment,
- Fig. 6b: is a schematic view of an embodiment of a method and a device for hydrothermally treating carbon-containing material, the method including mixing the feedstock with an aqueous fraction in a mixer and heating the mixture either in the mixer or in the reactor for the hydrothermal treatment,
- Fig. 6c: is a schematic view of an embodiment of a method and a device for hydrothermally treating carbon-containing material, the method including mixing the feedstock with an aqueous fraction in a mixer and heating the mixture in a heater that is comprised by the reactor but separate from a reaction zone of the reactor,
- Fig. 7: is a schematic view of an embodiment of a method and a device for hydrothermally treating carbon-containing material, wherein the product fraction and an aqueous fraction are separated already in the reactor, and
- Figs. 8a to 8d: show some possibilities for feeding second aqueous fraction to the electrochemical purifier and removal of recyclable aqueous fraction therefrom.

### Detailed description

The invention relates to methods and devices for hydrothermally treating carbon-containing material. In this description, carbon-containing material refers to a material that comprises carbon. Preferably, carbon-containing material comprises at least 25 w% (percentage by weight) carbon, more preferably at least 40 w% carbon, in terms of dry mass. Carbon-containing material may comprise or consist of biomass. Carbon-containing material may comprise polymer materials, e.g. plastics. Carbon-containing material may comprise or consist of residue-derived material, such as refuse-derived fuel (RDF) and/or solid recovered fuel (SRF). In general, SRF is a special type of RDF, and SRF has a standardized quality.

The carbon-containing material may comprise or consist of biomass. Biomass may comprise materials of animal origin and/or material of plant origin. In general, material of plant origin comprises lignocellulosic material. Lignocellulosic material refers to material comprising at least one of lignin and cellulose. Lignocellulosic material may comprise virgin and waste materials of plant origin, such as virgin wood, wood residues, forest residues, waste, municipal waste, industrial waste or by-products, agricultural waste or by-products, residues or by-products of the wood-processing industry, waste or by-products of the food industry, solid or semi-solid organic residues of anaerobic or aerobic digestion, such as residues from bio-gas production from lignocellulosic and/or municipal waste material, residues from bio-ethanol production process, and any combinations thereof. Suitably said lignocellulosic material comprises waste and by-products of the wood-processing industry such as slash, urban wood waste, lumber waste, wood chips, wood waste, sawdust, straw, firewood, wood materials, paper, by-products of the papermaking or timber processes, where the lignocellulosic material is composed of at least lignin. The lignocellulosic material may further comprise cellulose; however, cellulose fibres of wood may have been removed for other purposes, and the remaining biomass may constitute the lignocellulosic material of the feedstock. Specific examples of lignocellulosic materials include black liquor (comprising lignin but only a minor amount, if any, cellulose), and wood residues (comprising lignin and cellulose, and also hemicellulose).

As will be detailed below, because of electrochemical purification, a content of chloride is reduced, and in some embodiments, also a content of alkali ions is reduced by recycling such an aqueous fraction that has a low content of alkali ions. In an embodiment, an aqueous fraction is used to improve separation of a product fraction PF and a second aqueous fraction A2 from an intermediate product IP. Concerning chloride, the method is usable even if a chloride content of the feedstock material is reasonably high. Specific examples of materials having a high chloride content and are therefore usable as a feedstock material of the present invention includes in general material having a high content of salt and/or a high content of ash. Such materials include microalgae, in particular microalgae grown in sea water, because such microalgae have a high salt content. However, some embodiments are usable also when an alkali content of the feedstock is reasonably high, because also a content of alkali ions can be reduced. Specific examples of materials having a high alkali content and are therefore usable as a feedstock material of the present invention includes in general material having a high content of salt and/or a high content of ash. Such materials include residues from a pulp process, e.g. a Kraft pulp process, such as black liquor. In addition, various slurries often contain a high amount of ash, which oftentimes contain a lot of chloride and/or alkali, whereby such a slurry may serve as (a part) of the feedstock. In addition, many materials of circular economy have a reasonably high content of contaminants. Such contaminants oftentimes include salt and/or ash. Therefore, the feedstock may comprise recycled material and/or recyclable materials.

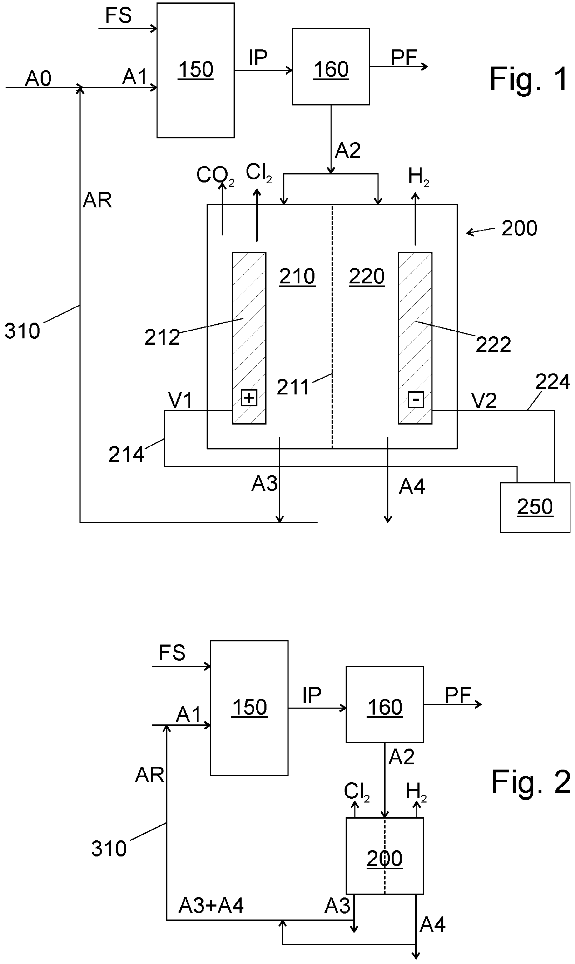

Referring to Fig. 1, a part of the hydrothermal treatment of the carbon-containing material is carried out in a reactor 150. The carbon-containing material is supplied to the rector 150 as a part of a feedstock FS, whereby the feedstock FS comprises the carbon-containing material. A hydrothermal conversion of the carbon-containing material, which is a central part of the treatment, takes place in the reactor 150. In an embodiment, the feedstock FS comprises lignocellulosic material.

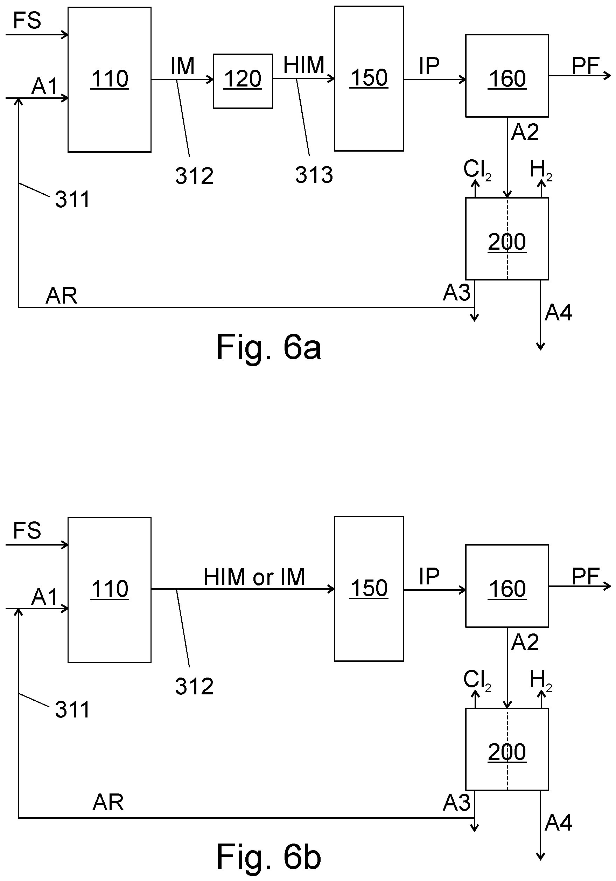

The hydrothermal conversion refers to a process in which the carbon-containing material is treated at an elevated temperature and in a high pressure in the presence of water. To have a sufficient water content in the reactor 150, the method comprises supplying the feedstock FS and a first aqueous fraction A1 to a reactor 150. The feedstock FS and the first aqueous fraction A1 may be supplied to the reactor 150 through other components, such as a mixer 110 and a heater 120, as will be detailed later in connection with Figs. 6a to 6c. Referring to Fig. 1, the first aqueous fraction A1 may comprise make-up fraction A0 and a recyclable aqueous fraction AR receivable from an electrochemical purifier 200. The make-up fraction A0 and the recyclable aqueous fraction AR may be mixed with each other upstream from the reactor 150, as in Fig. 1, or they may be supplied to the reactor 150 separately. If the electrochemical purifier 200 produces sufficiently recyclable aqueous fraction AR, the make-up fraction A0 is not needed.

To convert the carbon-containing material, the method comprises holding the feedstock FS and the first aqueous fraction A1 in the reactor 150 in a pressure and at a temperature for a period to hydrothermally treat the feedstock FS. As the feedstock FS is treated, the carbon-containing material thereof is converted, and an intermediate product IP is formed in the reactor 150.

The pressure in the reactor 150 during the treatment is in the in the range 50 bar to 400 bar. A temperature in the reactor 150 during the treatment is in the range 250 °C to 500 °C. The period should be sufficiently long to facilitate the conversion reactions. However, the period should not be too long to avoid repolymerization and other secondary reactions of the reaction products. Moreover, a long period (i.e. long retention time) implies larger equipment and higher thermal losses, thereby increasing investment and operational costs. The temperature and pressure affect the limit, how long the period should be at least. As an example, when the pressure is 150 bar to 250 bar and the temperature is 300 °C to 380 °C, a duration of the period may be e.g. 3 to 10 minutes. As another example, when the pressure is 130 bar to 180 bar and the temperature is 180 °C to 280 °C, a duration of the period of time may be e.g. 60 minutes. The pressure needs not be constant during the treatment. The temperature needs not be constant during the treatment.

In this field, the hydrothermal treatment of the carbon-containing material, as disclosed above, is known by various names including hydrothermal upgrading (HTU), hydrothermal liquefaction (HTL), hydrothermal carbonization (HTC), super critical water liquefaction (SCWL), and super critical water oxidation (SCWO). In each one of these processes, carbon-containing material is hydrothermally treated with water, whereby water consumption can be reduced by recycling.

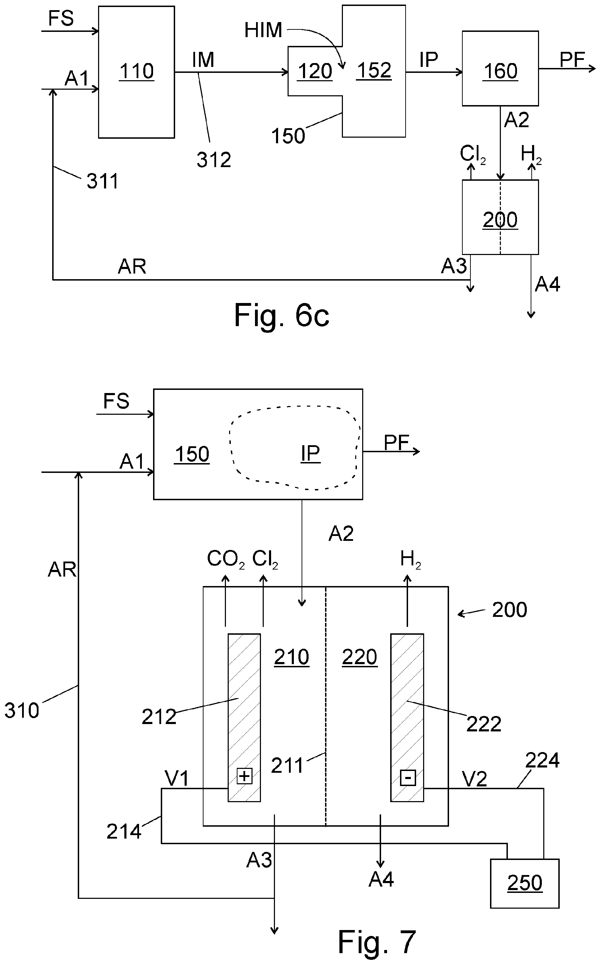

In an embodiment, after the conversion of the carbon-containing material and before separation (which is discussed later), the temperature of the hydrothermally treated carbon-containing material is reduced to 25 - 200 °C and the pressure is reduced to 1 - 70 bar. The reduction of temperature and pressure may be done by reducing the temperature and the pressure in the reactor 150 (see Fig. 7). The reduction of temperature and pressure may be done by reducing the temperature and the pressure in a separator 160 (see Fig. 1).

During the conversion of the carbon-containing material, the intermediate product IP forms in the reactor 150. The intermediate product IP is the reaction product of the feedstock FS and the first aqueous fraction A1.

The method comprises, after the conversion of the carbon-containing material, separating from the intermediate product IP a product fraction PF and a second aqueous fraction A2. Referring to Fig. 1, an embodiment comprises separating from the intermediate product IP a product fraction PF and a second aqueous fraction A2 in a separator 160. The separation may be carried out in the reactor 150, as shown in Fig. 7. For example, the separator 160 may be integrated with other parts of the reactor 150.

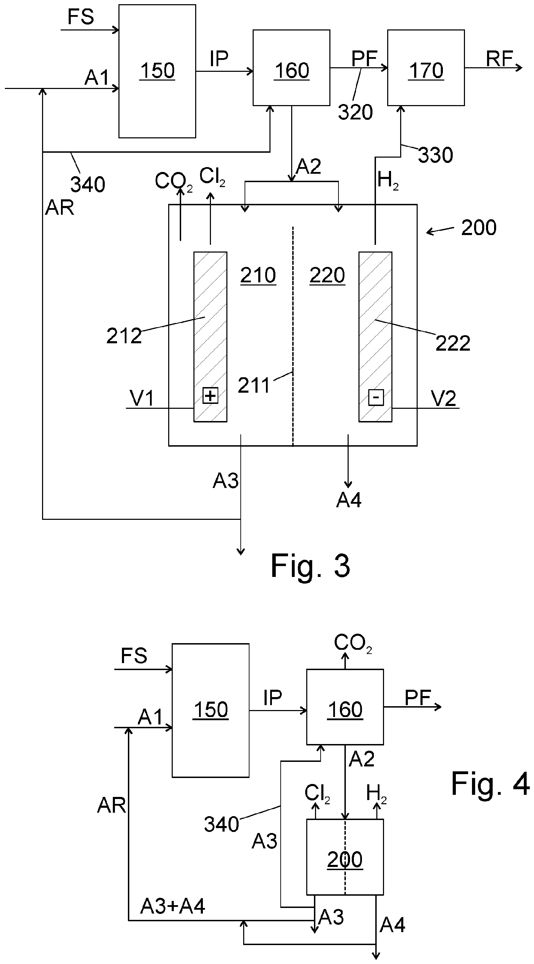

The separation of the product fraction PF and the second aqueous fraction A2 is improved by feeding at least part of a third aqueous fraction A3 to the separator 160, which may be an integral part of the reactor 150, or to a location that is between the reactor 150 and the separator 160. Reference is made to Figs. 3 and 4. It is also noted that the separation of the product fraction PF and the second aqueous fraction A2 can be improved as discussed, even if no aqueous fraction is recycled to the reactor 150 or upstream therefrom (not shown in figures). The separation is improved particularly when hydrocarbons are formed in the hydrothermal conversion process, whereby the intermediate product IP comprises a first phase comprising mainly non-polar compounds and a second phase comprising mainly polar compounds.

In particular, the separation may be carried out after lowering the temperature and pressure to the range discussed above. The separation may occur in the reactor 150 as a result of lowering the temperature and pressure of the reactor 150. As an alternative, the intermediate product IP may be conveyed from the (high pressure and temperature) reactor 150 to a separator 160 having a lower temperature and pressure within the limits disclosed above.

In the hydrothermal conversion process hydrocarbons are formed. Hydrocarbons in general are non-polar compounds. In contrast, water is a polar compound. Polar compounds do not dissolve in a non-polar compound. Thus, from the intermediate product IP, a first phase comprising mainly non-polar compounds and a second phase comprising mainly polar compounds may be separated. The first phase may constitute the product fraction PF. The second phase may constitute the second aqueous fraction A2. In general, polar compounds have a different density than the non-polar compounds. Therefore, the phases can be separated, e.g. by means of gravity and/or by using a centrifuge. However, which one of the phases has a higher density may depend on the case at hand. For example, a content of salts affects a density of the second aqueous phase A2, and the type of carbon-containing material may affect the type of hydrocarbons that are produced by the conversion, which affect the density of the product fraction PF.

Thus, in an embodiment, the separation of the product fraction PF and the second aqueous fraction A2 from the intermediate product IP comprises allowing phase-separation of polar compounds from non-polar compounds to form a non-polar phase and a polar phase, and the product fraction PF comprises the non-polar phase and the second aqueous fraction A2 comprises the polar phase.

The second aqueous fraction A2 comprises water. A water content of the second aqueous fraction A2 is higher than a water content of the product fraction PF. Moreover, a content of hydrocarbons in the product fraction PF is higher than a content of hydrocarbons in the second aqueous fraction A2. The term content refers here to a relative content, as measured in mass percentage (kg/kg).

In an embodiment, the second aqueous fraction A2 comprises water, salt, and organic compounds. Herein the term "salt" refers to a chemical compound consisting of an ionic assembly of positively charged cations and negatively charged anions, which results in a compound with no net electric charge. In an embodiment, the product fraction PF comprises oily compounds that are non-polar. In an embodiment, the product fraction PF has a higher content of oily compounds than the second aqueous fraction A2. Moreover, in an embodiment, the product fraction PF has a lower content of water than the second aqueous fraction A2.

To reduce water consumption of the process, at least a part of the water of the second aqueous fraction A2 is recycled back to the process, as will be detailed below. However, typically the feedstock FS comprises also salts, in particular salts comprising chloride. Thus, the second aqueous fraction A2 typically comprises chloride (Cl⁻) resulting from the salts of the feedstock FS, which poses problems for recycling the second aqueous fraction A2 as such.

Therefore, the method comprises conveying the second aqueous fraction A2 to an electrochemical purifier 200. A purpose of the electrochemical purifier 200 is to reduce the amount chloride ions in the aqueous fraction such that a part of the second aqueous fraction A2 can be recycled with less risk of corrosion. The inventor has found that chloride content can be reduced by removing chloride ions from the recycled part of the second aqueous fraction A2 with the electrochemical purifier 200. Preferably, chlorine gas Cl₂ is produced in the process.

Moreover, the second aqueous fraction A2 oftentimes comprises some carbon-containing material, e.g. hydrocarbons. When, in such a case, at least a part of the second aqueous fraction A2 is allowed to contact the anode 212 of the electrochemical purifier 200, some of the carbon-containing materials of the second aqueous fraction A2 are oxidized at the anode 212 and carbon dioxide (CO₂) is produced in a first cell 210 of the electrochemical purifier 200. Selecting the material of the anode 212 may promote this oxidation. The oxidation, which is an exothermic reaction, has the benefit that it has been found to decrease the amount of electricity needed for electrochemical purification.

Referring to Fig. 1, the electrochemical purifier 200 comprises a first cell 210, an anode 212 arranged in the first cell 210, a second cell 220, and a cathode 222 arranged in the second cell 220. As for the terms anode and cathode, both these are electrodes, i.e. capable of conducting electricity. The anode 212 is positive relative to the cathode 222. Thus, the method comprises applying a first voltage V1 to the anode 212 and a second voltage V2 to the cathode 222 such that the first voltage V1 is greater than the second voltage V2 (V1>V2). Thus is shown by the plus sign "+" depicted for the anode 212 and the minus sign "-" depicted for the cathode 222 in Fig. 1. By applying these voltages, the second aqueous fraction A2 becomes purified by electrolysis. The electrolyte in the cells 210, 220 is formed of the second aqueous fraction A2 and/or obtained from another cell of the purifier 200. As detailed below, the composition of the electrolyte in the first cell 210 is different from the composition of the electrolyte in the second cell 220. As readable from Fig. 1, in an embodiment, a first part of the second aqueous fraction A2 is conveyed to the first cell 210 and a second part of the second aqueous fraction A2 is conveyed to the second cell 220.

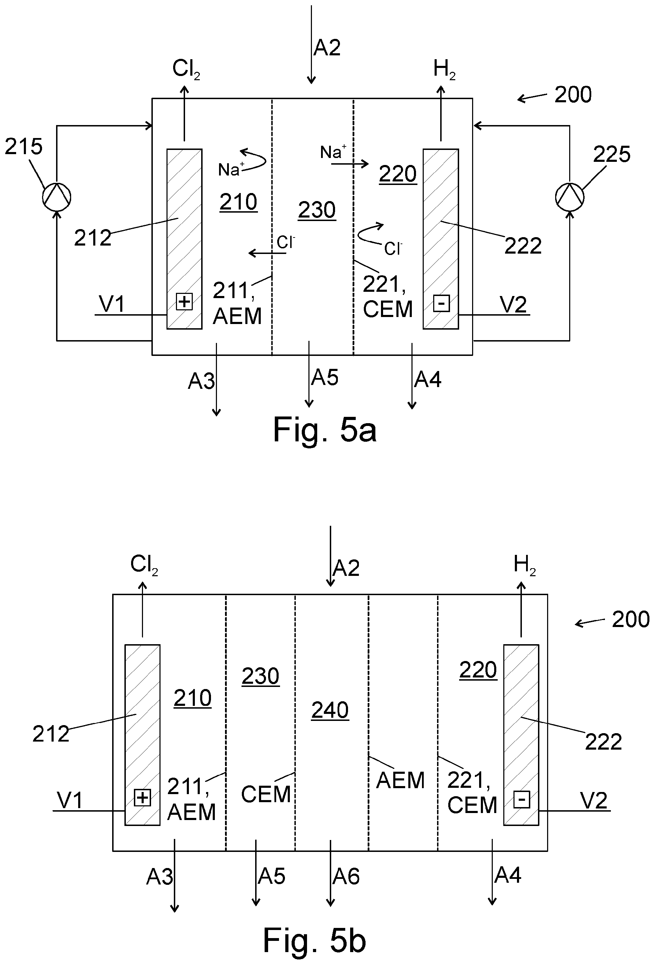

The electrochemical purifier 200 operates by electrodialysis. Therefore, the electrochemical purifier 200 comprises a first ion-exchange membrane 211 arranged between the first cell 210 and the second cell 220. As readable from this, the term "cell" refers to a volume of the electrochemical purifier 200, the volume being delimited by walls of the electrochemical purifier 200 and at least one ion-exchange membrane. A cell (210, 220, 230, 240) may be delimited by two ion-exchange membranes, in particular an anion-exchange membrane AEM and a cation exchange membrane CEM, and walls of the purifier 200, as shown in Figs. 5a and 5b. Accordingly, one, two, or more than two, ion-exchange membrane(s) divide the interior of the electrochemical purifier 200 to (at least) two cells: a first cell 210 and a second cell 220.

In general, an ion-exchange membrane 211 is a semi-permeable membrane that transports certain dissolved ions, while blocking other ions or neutral molecules. Ion-exchange membranes are therefore electrically conductive. In the present invention, at least one ion-exchange membrane is used mainly for desalination of the second aqueous fraction A2, moving ions from one cell (e.g. from 210; or 220) to another cell (e.g. to (220 or 230); or e.g. to (210 or 230)) with little or no transfer of water between the cells. The first ion-exchange membrane 211 is an anion-exchange membrane or a cation-exchange membrane. In general, an anion-exchange membrane is a membrane though which anions (i.e. negative ions) can pass, and conversely, cations (positive ions) cannot pass. Likewise, a cation-exchange membrane is a membrane though which cations (positive ions) can pass, and conversely, anions (i.e. negative ions) cannot pass. This operation principle is shown in Fig. 5a for chloride Cl⁻ as an example of an anion, and sodium ion Na⁺ as an example of a cation. The anion (Cl⁻) can pass the anion-exchange membrane AEM but not the cation exchange membrane CEM. Likewise, the cation (Na⁺) can pass the cation-exchange membrane CEM but not the anion exchange membrane AEM. Preferably, the first ion-exchange 211 membrane is an anion-exchange membrane to allow the chloride ion to pass the membrane 211 towards the anode 212 (see Fig. 5a). Thus, chloride can be removed from both the cells 210 and 230 (in Fig. 5a) or, if an anion-exchange membrane is used as the first ion exchange membrane 211 in the embodiment of Fig. 1, chloride can be removed from both the cells 210 and 220. However, even if the first ion exchange membrane 211 is a CEM, chloride is removed from the first cell 210.

The chloride ions Cl⁻ are dragged by electronic attractive forces to the anode 212. At the anode 212 the chloride ions form hypochlorous acid (HClO) and/or become oxidized to form chlorine gas (Cl₂). A preferable embodiment comprises producing chlorine Cl₂ in the first cell 210. The chlorine is produced in the gaseous form. An embodiment comprises collecting the chlorine gas. For reasons discussed above, preferably, the chlorine is not fed back to the process. However, it may be used in another process. It has been found that a low pH in the first cell 210 promotes the production of chlorine as opposed to production of hypochlorous acid (HClO).

The hydronium ions H⁺ and/or hydroxonium ions H₃O⁺ are dragged by electronic attractive forces to the cathode 222. Without being bound to any theory, a hydronium ion H⁺ of a hydroxonium ion H₃O⁺ reacts at the cathode 222 with another hydronium ion H⁺ or another hydroxonium to form hydrogen gas H₂ and water H₂O within the second cell 220. Thus, the method comprises producing hydrogen H₂ in the second cell 220. The hydrogen H₂ is produced in gaseous form. Possibilities for utilizing hydrogen H₂ will be discussed below. The oxidation of hydrocarbons at the anode 212, as discussed above, may promote the production of hydrogen H₂, thereby reducing the consumption of electricity.

It has been found that the first ion exchange membrane 211 provides for a much smaller use of electricity as compared to electrochemical purification without any ion exchange membrane. Moreover, as the first ion exchange membrane 211 only allow for ions (anions or cation) to pass, the first ion exchange membrane 211 provides for good control of the ion contents of the various aqueous fractions (A3, A4, A5) and in this way, in particular allows for controlling the content of a recyclable aqueous fraction AR, as defined below. Moreover, the first ion exchange membrane 211 helps to keep the pH of the third aqueous fraction A3 low if chlorine gas (Cl₂) is to be produced.

In this way, the second aqueous fraction A2 is being purified by electrodialysis in the electrochemical purifier 200. As a result, a third aqueous fraction A3 is produced into the first cell 210 and a fourth aqueous fraction A4 is produced into the second cell 220. Thus, the third aqueous fraction A3 is arranged in the first cell 210 and the fourth aqueous fraction A4 is arranged in the second cell 220. Referring to Fig. 5a, a fifth aqueous fraction A5 may be produced in a third cell 230. Other aqueous fractions are producible in other cells, if used.

To promote the electrochemical reactions in the cells 210, 220, an embodiment comprises mixing the third aqueous fraction A3 and/or mixing the fourth aqueous fraction A4. Mixing the third aqueous fraction A3 may be performed by a mixer arranged in the first cell 210 (not shown). Mixing the fourth aqueous fraction A4 may be performed by a mixer arranged in the second cell 220. In a preferable embodiment, the mixing of the third aqueous fraction A3 comprises recycling a part of the third aqueous fraction A3 to the first cell 210. Reference is made to Fig. 5a, wherein a first pump 215 is used for recycling a part of the third aqueous fraction A3 to the first cell 210. Likewise, preferably, the mixing of the fourth aqueous fraction A4 comprises recycling a part of the fourth aqueous fraction A4 to the second cell 220. Reference is made to Fig. 5a, wherein a second pump 225 is used for recycling a part of the fourth aqueous fraction A4 to the second cell 220.

In an embodiment, such an amount of the chlorine (Cl₂) is produced that a chloride content of the third aqueous fraction A3 is less than a chloride content of the second aqueous fraction A2. In an embodiment, the third aqueous fraction A3 has an at least 50 % lower content of chloride Cl⁻ than the second aqueous fraction A2. In an embodiment, the third aqueous fraction A3 has an at least 75 % lower content of chloride Cl⁻ than the second aqueous fraction A2. Herein the content is defined in unit of mass per volume (e.g. milligrams per litre).

A part of the third aqueous fraction A3 can be utilized in the separation of the product fraction and the second aqueous fraction from the intermediate product, as discussed above. In addition, because the third aqueous fraction A3 has a low chloride content, it can be recycled back to the process, i.e. back to the reactor 150.

The third aqueous fraction A3 has a low content of chloride also in such a case, where the first ion exchange membrane 211 is a cation exchange membrane and the pH of the third aqueous fraction A3 is so low that chlorine is produced at the anode 212. Moreover, in such a case, the third aqueous fraction A3 has lower content of alkali than the second aqueous fraction A2. The low pH also promotes the separation of the polar and non-polar phases of the intermediate product.

However, referring to Fig. 5a, also the fifth aqueous fraction A5 (if produced) has a low content of chloride. Thus, in the alternative or in addition, the fifth aqueous fraction A5 can be recycled back to the process, i.e. back to the reactor 150. It is also noted that the chloride content of the fifth aqueous fraction A5 is reduced irrespective of whether the chloride ions in the first cell 210 form hypochlorous acid or are oxidized to form chloride. Referring to Fig. 5a, it is noted that the fifth aqueous fraction A5 also has a low content of content of cations, because the cation exchange membrane 221 allows cations to pass. A low content of cations implies a low content of alkali ions, in particular sodium and potassium.

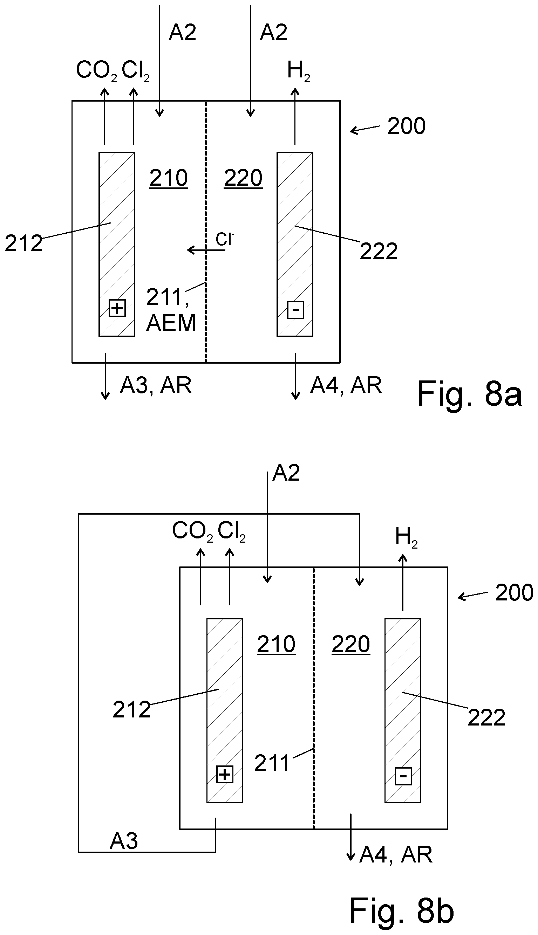

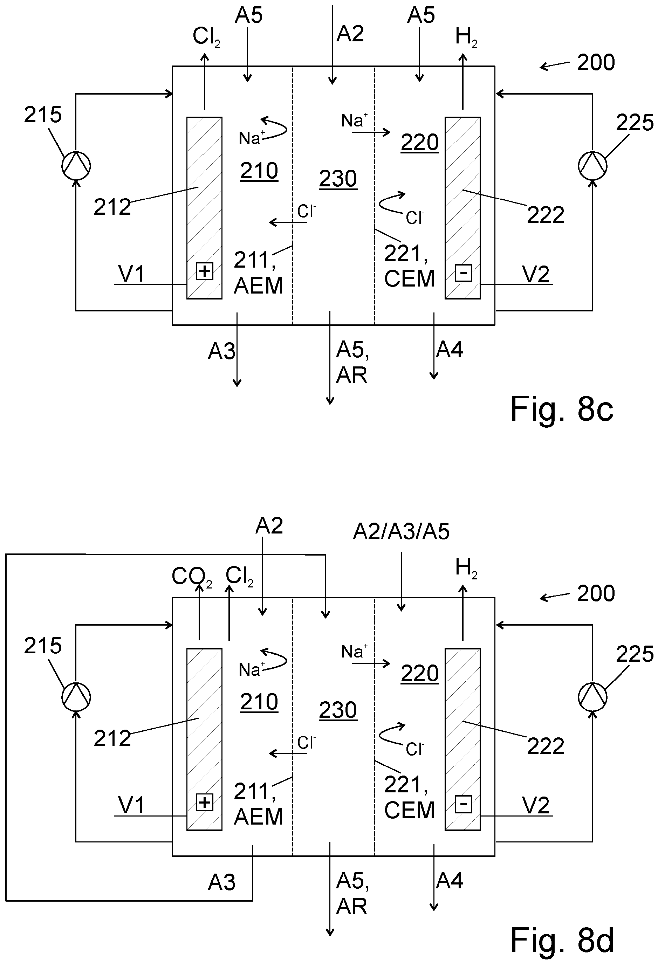

Moreover, referring to Fig. 8b, the third aqueous fraction A3 can be supplied to the second cell 220 of the electrochemical purifier, whereby also the fourth aqueous fraction A4 may have a low chloride content. Fig. 8d shows a further possibility for oxidizing hydrocarbons at the anode 212 and producing a fifth aqueous fraction A5 having a low content of both chloride and sodium. Notably, the fifth aqueous fraction A5 in Figs. 5a, 8c, and 8d have a reduced content of chloride even if chlorine Cl₂ is not produced at the anode 212.

As readable from above, there are many possibilities for recycling water in this set-up. However, the method comprises recycling at least a part of a recyclable aqueous fraction AR from the electrochemical purifier 200 to the reactor 150. As readable from above, the recyclable aqueous fraction AR has a lower content of chloride Cl⁻ than the second aqueous fraction A2. This is due to the formation of chlorine Cl₂ and/or hypochlorous acid HClO at the anode 212. In an embodiment, the recyclable aqueous fraction AR has an at least 50 % lower content of chloride Cl⁻ than the second aqueous fraction A2. In an embodiment, the recyclable aqueous fraction AR has an at least 75 % lower content of chloride Cl⁻ than the second aqueous fraction A2. Herein the content is defined in unit of mass per volume (e.g. milligrams per litre).

In Figs. 1 and 3, the recyclable aqueous fraction AR comprises the third aqueous fraction A3. In Figs. 2 and 4, the recyclable aqueous fraction AR comprises the third aqueous fraction A3 and the fourth aqueous fraction A4. In Fig. 5a, the recyclable aqueous fraction AR comprises the fifth aqueous fraction A5. In Fig. 8b, the recyclable aqueous fraction AR comprises the fourth aqueous fraction A4.

As the recyclable aqueous fraction AR has been purified from chloride at least to some extent, it can be recycled back to the process, particularly back to the reactor 150.

For reasons detailed above, in an embodiment, the recyclable aqueous fraction AR has a lower content of alkali ions (Na⁺, K⁺, Mg²⁺, Ca²⁺) than the second aqueous fraction A2. This is due to the cathode attracting the alkali ions and the recyclable aqueous fraction AR being taken from another location (e.g. from the first cell 210 as the third aqueous fraction A3 and/or from the third cell 230 as the fifth aqueous fraction A5). In an embodiment, the recyclable aqueous fraction A5 has an at least 50 % lower content of alkali ions than the second aqueous fraction A2. Herein the content is defined in unit of mass per volume (e.g. milligrams per litre).

Concerning the oxidation of the carbon-containing material(s) of the second aqueous fraction A2, an embodiment of the method comprises feeding at least a part of the second aqueous fraction A2 to the first cell 210 and producing carbon dioxide CO₂ in the first cell 210 by oxidizing a carbon-containing compound of the second aqueous fraction A2 at the anode 212. Feeding at least a part of the second aqueous fraction A2 to the first cell 210 is schematically shown at least in Figs. 1, 3, 7 (in which a part of A2 or A3 may be fed to the second cell 220), 8a, 8b, and 8d. It is noted that also in the embodiment of Fig. 8c at least a part of the second aqueous fraction A2 is fed to the first cell 210 for oxidating the carbon-containing material therein. As depicted therein, the second aqueous fraction A2 is first fed to the third cell 230 and desalinated therein to form a fifth aqueous fraction A5, which comprises the hydrocarbons and water of the second aqueous fraction A2. Thereafter, the fifth aqueous fraction A5, which is a part of the second aqueous fraction, is fed to the first cell 210 for oxidating the carbon-containing material therein. As shown in Fig. 8c, a part of the fifth aqueous fraction A5 is fed to the second cell 220, too. In the alternative, the second (A2) or the third (A3) aqueous fraction could be fed to the second cell 220 for use as an electrolyte therein. In the embodiment of Fig. 8d, any one of the second, third, or fifth aqueous fractions (A2, A3, A5) may be fed to the second cell for use as an electrolyte therein.

Concerning the embodiment of Fig. 8a, when the first ion-exchange membrane 211 is an anion-exchange membrane AEM, chloride ions are dragged by the anode 212 also from the second cell 220. Thus, the content of chloride of the fourth aqueous fraction A4 will be reduced, and the fourth aqueous fraction A4 can be used as the recyclable fraction AR. This applies irrespective of whether chlorine gas is produced in the first cell 210, or if the chloride only forms hypochlorous acid in the first cell 210. If only hypochlorous acid is produced in the first cell 210, then chloride becomes concentrated, in the first cell 210 and the third aqueous fraction A3 should be used otherwise. However, preferably, chlorine is produced in the first cell 210, whereby also the third aqueous fraction A3 can be used as at least a part of the recyclable aqueous fraction AR. However, if a cation-exchange membrane CEM would be used instead of an AEM, then the content of chloride in the second cell 220 would not be significantly reduced. In that case, however, the production of chlorine in the first cell 210 will reduce content of chloride and enable recycling of the third aqueous fraction A3. As detailed in Fig. 8b, the third aqueous fraction A3 may be recycled e.g. through the second cell 220.

It has been found that the amount of produced chlorine depends on pH, as will be detailed below, and also on a magnitude of the electric current running from the anode 212 to the cathode. The more electrons are received by the anode 212 from the electrolyte surrounding the anode, the more reduction reactions take place. In practice, the anode 212 conducts electricity much better than the electrolyte. Therefore, the current is spread over a surface of the anode. Therefore, a density of electric current is an important quantity for characterizing the reduction process at the anode 212. The density of the electric current is calculated by dividing the electric current running from the anode 212 to the cathode 222 by an area of the surface of the anode 212. The surface herein refers to the interface between the anode 212 and the electrolyte in which the anode 212 is arranged in use. It has been found that a suitable density of the electric current in view of chlorine production, at least when the pH of the aqueous fraction in the first cell 220 is at most 3, is 1 A/m² to 50 A/m² (Amperes per square metre). The current (and thus the current density) can be controlled by controlling a difference of the first voltage V1 and the second voltage V2, the difference V2 subtracted from V1. For example, V2 may be set to a ground potential (i.e. zero by definition), whereby only V1 needs to be controlled. A direct current (DC) potential may be used for the voltages V1, V2, however, the DC voltage difference V1-V2 may be also controlled.

For these reasons, an embodiment comprises applying the first voltage V1 to the anode 212 and the second voltage V2 to the cathode 222 such that a density of the electric current running from the anode 212 to the cathode 222 is 1 to 50 Amperes per square metre.

In accordance with what has been said concerning the method, Figure 1 shows schematically a device for hydrothermally treating feedstock FS that comprises carbon-containing material. The device comprises the reactor 150. The reactor is configured to hold the feedstock FS and the first aqueous fraction A1 in the reactor 150 in a pressure and at a temperature for a period to hydrothermally treat the feedstock FS for forming the intermediate product IP. The temperature and pressure may be within the limits disclosed in the context of the method above. This poses some limitations for the material selections of the reactor 150.

The device is configured to separate from the intermediate product IP a product fraction PF and a second aqueous fraction A2. In an embodiment, the device comprises a separator 160 configured to separate from the intermediate product IP a product fraction PF and a second aqueous fraction A2. What has been said about the contents of these fraction in connection with the method applies.

The device comprises the electrochemical purifier 200 as discussed above. The electrochemical purifier 200 is configured to receive the second aqueous fraction A2.

To operate the device, the electrochemical purifier 200 comprises an electric source 250 (see Fig. 1). The electric source 250 is configured to generate the first voltage V1 and the second voltage V2 as discussed above. The electrochemical purifier 200 comprises a first electric conductor 214 configured to conduct the first voltage V1 to the anode 212. The electrochemical purifier 200 comprises a second electric conductor 224 configured to conduct the second voltage V2 to the cathode 222.

To recycle at least a part of the recyclable aqueous fraction AR, the device comprises a first pipeline 310 configured to recycle at least a part of a recyclable aqueous fraction A5 from the electrochemical purifier 200 to the reactor 150 optionally through other components of the device. For example, in Figs. 1 and 7, the first pipeline 310 is configured to recycle at least a part of a third aqueous fraction A3 from the first cell 210 to the reactor 150 directly. However, more typical embodiments are shown in Figs. 6a to 6c.

The embodiments of Figs. 6b and 6c comprise a mixer 110. In these embodiments, a first part 311 of the first pipeline 310 is configured to recycle at least a part of the recyclable aqueous fraction A5 from the electrochemical purifier 200 to the mixer 110. A second part 312 of the first pipeline 310 is configured to convey input material IM or heated input material HIM from the mixer 110 to the reactor 150, which in Fig. 6c comprises a heater 120. The mixer 110 may comprise a heater, in which case heated input material HIM can be conveyed from the mixer 110 to the reactor 150 through the second part 312 of the first pipeline 310. However, when the reactor 150 comprises a heater 120 or the device comprises a separate heater 120, input material IM can be conveyed from the mixer 110 to the reactor 150 (or to the heater 120) through the second part 312. For a heater 120 that is not comprised by the reactor 150, reference is made to Fig. 6a. Thus, in the embodiment of Figs. 6a to 6c, the second part 312 of the first pipeline 310 is configured to convey input material IM or heated input material HIM from the mixer 110 to the reactor 150 optionally through other components of the device; e.g. in Fig. 6a through the heater 120 and in Figs. 6b and 6c directly to the reactor 150.

The embodiment of Fig. 6a comprises the mixer 110 and a heater 120. In the embodiment of Fig. 6a, the second part 312 of the first pipeline 310 is configured to convey at least a part of an input material IM from the mixer 110 to the heater 120. Moreover, a third part 313 of the first pipeline 310 is configured to convey heated input material HIM from the heater 120 to the reactor 150.

The mixer 110, the heater 120, or the reactor 150 (or a combination of these) is configured to mix the feedstock FS with the first aqueous fraction A1 and heat the mixture thereof to the process temperature disclosed above. The pressure may increase because of the increasing temperature (reference is made to saturation point of water). The device may comprise a pump or pumps to pump both the feedstock FS and the first aqueous fraction A1 to the reactor 150 separately or in the form of their mixture.

Concerning the chemistry of the electrodialysis process, i.e. the process that is run in the electrochemical purifier 200, in general the anode 212 drags the chloride ions (Cl⁻) towards the anode 212. Likewise, the cathode 222 drags the alkali metal ions and earth alkali metal ions (Na⁺, K⁺, Mg²⁺, Ca²⁺) and hydronium ions (H⁺) towards the cathode 222.

Generally, the chemical reactions in the cells 210, 220 include reactions at the anode 212, formally as:

2H₂O ↔ O₂ + 4H⁺ + 4e- .

The electrons become absorbed by the anode 212. Moreover, an anion-exchange membrane may prevent the hydronium H⁺ from escaping the first cell 210, whereby the presence of hydronium may decrease the pH therein.

In addition, the chemical reactions in the cells include reactions at the cathode 222, formally as:

2H₂O + 2e- ↔ 2H₂ + 2OH⁻ ;

and

2H⁺ + 2e⁻ ↔ H₂ ,

the electrons being emitted by the cathode 222.

Concerning further reactions at the anode 212, the chloride ions may form metal radicals, which, when reacting with each other, form the chlorine gas. The reactions include

2M + 2Cl⁻ → 2(MCl^{•}) + 2e⁻ → 2M + Cl₂ + 2e⁻ ,

the electrons e- being absorbed by the anode 212.

In view of this, the metal material M used on the surface of the anode 212 plays a significant role in the formation of chlorine gas. To ensure suitable production of chlorine, in an embodiment, the anode 212 comprises at least one of ruthenium (Ru), iridium (Ir), platinum (Pt), tin (Sn), lead (Pb), boron (B), iron (Fe), nickel (Ni), and graphite. Steel is an example of material comprising iron (Fe). However, some of these metals may be present in the form of a suitable compound. Therefore, more preferably, anode 212 comprises at least one of ruthenium oxide (RuO₂), iridium oxide (IrO₂), platinum (Pt), tin oxide (SnO₂), lead oxide (PbO₂), boron doped diamond (BDD), iron (Fe), steel, nickel (Ni), and graphite. The metal is preferably present on the surface of the anode 212. Thus, in an embodiment, the anode 212 comprises on its surface at least one ruthenium (Ru), iridium (Ir), platinum (Pt), tin (Sn), lead (Pb), boron (B), iron (Fe), nickel (Ni), and graphite. In an embodiment, the anode 212 comprises on its surface at least one of ruthenium oxide (RuO₂), iridium oxide (IrO₂), platinum (Pt), tin oxide (SnO₂), lead oxide (PbO₂), boron doped diamond (BDD), iron (Fe), steel, nickel (Ni), and graphite. A core of the anode may be made of a first metal, e.g. titanium, fully or partly coated with a second material, the second material being selected from the group of RuO₂, IrO₂, Pt, SnO₂, PbO₂, BDD, Fe, steel, Ni, and graphite.

The material of the cathode 222 is not so critical. The cathode comprises electrically conductive material. Herein an electrically conductive material means material whose resistivity is at most 10⁻² Ωm at a temperature of 20°C. Examples include stainless steel, acid-proof steel, titanium, graphite, and conductive polymers. Preferably, the cathode comprises steel, such as stainless steel or acid-proof steel.

As for the shape of the electrodes (both or anode and cathode separately), they may be formed as a plate, as a mesh, as a rod, or as a series of rods. A shape of an electrode may be planar or substantially planar. In the alternative, in the field of electrochemical water purification, it is known to apply co-axial electrodes, the inner electrode being rod-like, and the outer electrode being circumferential and laterally surrounding the inner electrode (not shown, but reference is made to US2015/0122741).

In the electrolysis, the chlorine Cl₂ that is formed at the anode does not necessarily escape from the first cell 210 in the form of gas. Instead (or in addition) at least some of the chlorine may react with water to form hypochlorous acid (HClO), and the hypochlorous acid (HClO) may form hypochlorite ions (ClO⁻) according to the following reactions:

Cl₂ + H₂O ↔ Cl⁻ + HClO + H⁺

HClO ↔ ClO⁻ + H⁺

The distribution of these two chlorine species depends on the pH of the solution. In general, the pH in the first cell 210 should be kept low to avoid the formation of hypochlorous acid (HClO) and hypochlorite ions (ClO⁻). In addition to promoting the formation of chlorine, the low pH thus has the benefit that a content of hypochlorous acid (HClO) and hypochlorite ions (ClO⁻), both which are toxic, is reduced.

Therefore, an embodiment of the method comprises purifying the second aqueous fraction A2 in the electrochemical purifier 200 such that a pH of the third aqueous A3 fraction is at most 3. It has been found that the tendency of forming hypochlorous acid (HClO) and hypochlorite ions (ClO⁻) is significantly reduced below this limit. Preferably, the method comprises purifying the second aqueous fraction A2 such that a pH of the third aqueous A3 fraction is at most 2.

The pH in the first cell 210 may decrease because of the electrochemical purification as such, which involves oxidation organic compounds present in the second aqueous fraction A2. In brief, decomposition of organic compounds will produce H⁺ and CO₂ which both cause acidity in the first cell 210.

To elaborate, water of the second aqueous fraction A2 form metals radical compounds at the anode 212, formally as:

M + H₂O → M(HO^{•}) + H⁺ + e⁻

Then, these metal radical compounds promote the oxidation of organic compounds R as:

R + M(HO^{•}) → nCO₂+ mH₂O + other oxidation products

Particularly the hydronium H⁺ decreases the pH in the first cell 210, and with reference to Fig. 5a, the first ion-exchange membrane 211 may prevent hydronium H⁺ from passing to the second cell 220. In this way, the pH in the first cell 210 tends to decrease naturally. For this reason, too, the selection for the metal material of the anode should be considered carefully. The materials disclosed above for the anode suitably promote the oxidation of organic compounds, too, in addition to formation of chlorine.

The pH of the electrolyte in the first cell 210 can be measured, and, provided that the natural decrement of pH is not sufficient for production of chlorine gas, suitable acid may be added. The acid may be added for keeping the pH below 3, more preferably below 2. For example, hydrochloric acid (HCl) may be used for the purpose, if needed. The pH may be measured from the first cell 210, or if a circulation is used for mixing (see Fig. 5a), from the circulation comprising the first pump 215.

As an alternative to adding an acid, or in addition thereto, it may suffice to add some salt to the second aqueous fraction A2 to increase its conductance. By increasing the conductance, the electrochemical reactions may be promoted to such an extent that the pH decreases to a sufficiently low level naturally, as detailed above.

It is also noted that the production of H⁺ in the second cell 220 increases the pH therein. Thus, in general, a pH of the electrolyte in the second cell 220 will be high; unless the second cell 220 is supplied with an aqueous fraction having a low pH (see Fig. 8b).

As readable from these theoretical considerations, preferably the first ion-exchange membrane 211 is an anion-exchange membrane AEM. This prevents the hydronium from escaping the first cell 210 and in this way helps to keep the pH low for the formation of chlorine gas.

Referring to Fig. 5a, in an embodiment, the first ion-exchange membrane 211 is an anion-exchange membrane AEM and the electrochemical purifier 200 comprises a second ion-exchange membrane 221 that is a cation-exchange membrane CEM. More generally the electrochemical purifier 200 may comprise a set of ion-exchange membranes, the set of ion-exchange membranes comprising the first ion-exchange membrane 211, which is an anion-exchange membrane AEM, and the second ion-exchange membrane 221, which is a cation-exchange membrane CEM. Preferably the ion-exchange membranes are arranged such that the first ion-exchange membrane 211 is that one of the ion-exchange membranes that is closest to the anode 212. In other words, a cation-exchange membrane is not arranged between the first ion-exchange membrane 211 (which is AEM) and the anode 212. Moreover, preferably, the ion-exchange membranes are arranged such that the second ion-exchange membrane 221 is that one of the ion-exchange membranes that is closest to the cathode. In other words, an anion-exchange membrane is not arranged between the second ion-exchange membrane 221 (which is CEM) and the cathode 222. Reference is made to Figs. 5a and 5b.

In positive terms and with reference to Fig. 5a, at least a part of the anion-exchange membrane AEM (i.e. the first ion-exchange membrane 211) is arranged between the anode 212 and the cation-exchange membrane CEM (i.e. the second ion-exchange membrane 221), and at least a part of the cation-exchange membrane CEM (i.e. the second ion-exchange membrane 221) is arranged between the cathode 222 and the anion-exchange membrane AEM (i.e. the first ion-exchange membrane 211). Referring to Fig. 5a, in such an embodiment, a third cell 230 remains between the anion-exchange membrane AEM and the cation-exchange membrane CEM.

As readable from Fig. 5a, a fifth aqueous fraction A5 is receivable from the third cell 230. As also readable from Fig. 5a, the chloride ions from the third cell 230 can also transfer through the first ion-exchange membrane 211 to the cathode 212 to form the chlorine as detailed above. Therefore, the fifth aqueous fraction A5 can be used in a similar way as the third aqueous fraction A3. Thus, the recyclable aqueous fraction AR may comprise at least a part of the fifth aqueous fraction A5.

Referring to Fig. 5b, the throughput of desalinated water of the electrochemical purifier 200 may be improved by using further ion-exchange membranes. The further ion-exchange membranes (further relative to the embodiment of Fig. 5a) may be used such that each anion-exchange membrane AEM of the further ion-exchange membranes is arranged between two cation-exchange membranes CEM (see Fig. 5b). Moreover, each cation-exchange membrane CEM of the further ion-exchange membranes may be arranged between two anion-exchange membranes AEM (see Fig. 5b). However, two AEMs can be arranged next to each other and/or two CEMs can be arranged next to each other, because then they function in a similar manner as a single AEM or CEM, respectively. However, since they function as one, there is no technical reason for doing so.

For these reasons, in an embodiment, the electrochemical purifier 200 comprises an even number (2N) of ion-exchange membranes 211, wherein the even number is two times an integer N that is at least one. The type of the ion-exchange membranes 211 is selected such that N pieces of the ion-exchange membranes (i.e. half of them) are anion-exchange membranes AEM and N pieces of the ion-exchange membranes (i.e. the other half of them) are cation-exchange membranes CEM. Moreover, the even number (2N) is two, four six, eight, or more than eight.

However, as indicated above, two AEMs or two CEMs can be arranged next to each other. Thus, the electrochemical purifier 200 may comprise an odd number (2N+1) of ion-exchange membranes, such as three, five, seven, or more. As readable from the above, only one ion-exchange membrane may suffice. In such a case, it is preferably an anion-exchange membrane.

As readable from Fig. 5b, a sixth aqueous fraction A6 is receivable from a fourth cell 240. In Fig. 5b, the chloride ions of the fourth cell cannot pass the CEM that is arranged between the fourth cell 240 and the anode 212. Thus, the sixth aqueous fraction A6 comprises chloride. To remove chloride also from this fraction, the sixth aqueous fraction A6 may be fed to a point upstream from the electrochemical purifier and downstream from the reactor 150 or downstream from the separator 160, if the separation is made in a separator 160. The sixth aqueous fraction A6 may thus e.g. be mixed fifth the second aqueous fraction A2 upstream from the electrochemical purifier 200; or the sixth aqueous fraction A6 may be fed to the electrochemical purifier 200, e.g. such that at least a part of the sixth aqueous fraction A6 is fed to the first cell 210.

What has been said about the details of the electrochemical purifier 200 above and e.g. in Figs. 5a and 5b applies to the electrochemical purifier 200 of other embodiment, too, particularly those of Figs. 1 to 4 and 6a-6c, 7, and 8a to 8d.

As for the efficiency of the hydrothermal treatment of the carbon-containing material comprised by the feedstock FS, it has been found that many elements from the group I or II of the periodic table of elements, in particular sodium (Na), potassium (K), magnesium (Mg) and calcium (Ca), act as catalysts for the hydrothermal treatment reactions in the reactor 150. These materials may be added to the process, if needed. However, most often the feedstock FS comprises a sufficient amount of these compounds naturally in the form of salts. Of these materials, the elements from the group I of the periodic table of elements seem to be preferable catalysts.

The inventor has found, that when the feedstock FS comprises salt or salts comprising at least one of sodium (Na), potassium (K), magnesium (Mg) and calcium (Ca), the content of at least one of them in the reactor 150 can be increased by recycling also a part of such a fourth aqueous fraction A4, which is receivable from the second cell 220. As readable from Figs. 1, 3, and 5, the cations (the sodium cation Na⁺ shown as an example in Fig. 5) are dragged by the cathode 222 to the cathode 222, whereby the concentration of the cations of these elements increase in the second cell 220.

In the second cell 220 these elements form hydroxides, such as sodium hydroxide (NaOH), potassium hydroxide (KOH), magnesium hydroxide (Mg(OH)₂), and calcium hydroxide (Ca(OH)₂).

In such a case, the method preferably comprises recovering a fourth aqueous fraction A4 from the second cell 220. As detailed above, in such a case, the fourth aqueous fraction A4 comprises at least one sodium hydroxide (NaOH), potassium hydroxide (KOH), magnesium hydroxide (Mg(OH)₂), and calcium hydroxide (Ca(OH)₂). Reference is made to Figs. 2 and 4 showing recycling a part of the fourth aqueous fraction A4, whereby the recyclable aqueous fraction AR comprises at least a part of the fourth aqueous fraction A4.

Recycling least a part of the fourth aqueous fraction A4 to the reactor 150 has the further benefit that the fourth aqueous fraction A4 is, in such a case, can be used also to neutralize the third aqueous fraction A3, when both are comprised by the recyclable aqueous fraction AR. As detailed above, preferably a pH of the third aqueous fraction A3 is low to generate the chlorine gas. However, the hydrothermal treatment in the reactor 150 may be performed at a higher pH. In contrast to the third aqueous fraction A3, a pH of the fourth aqueous fraction A4 is high. Therefore, in addition to providing the catalysts to the reactor 150, recycling at least a part of the fourth aqueous fraction A4 to the reactor 150 also increases a pH therein. This benefit is achievable also in the case the fourth aqueous fraction A4 does not comprise any one of NaOH, KOH, Mg(OH)₂, and Ca(OH)₂. However, for reasons detailed above, preferably, the feedstock FS comprises salt or salts comprising at least one of sodium (Na), potassium (K); whereby the fourth aqueous fraction A4 comprises sodium hydroxide (NaOH) and/or potassium hydroxide (KOH).

The at least part of the fourth aqueous fraction A4 can be conveyed separate from the third aqueous fraction A3 to the reactor 150, the mixer 110, or the heater 120. However, a pH of the aqueous streams may be more easily controllable, and the equipment may remain simpler, if the at least part of the fourth aqueous fraction A4 is recycled to the reactor 150 with the at least part of the third aqueous fraction A3 that is recycled to the reactor 150. Reference is made to Figs. 2 and 4.

Therefore, in an embodiment, the at least part of the fourth aqueous fraction A4 is recycled by mixing it with the at least part of the third aqueous A3 fraction to obtain the recyclable aqueous fraction AR. The mixing may occur upstream of the reactor 150, and if used, also upstream of the mixer 110. In this way the pH of the mixture of the aqueous fraction A3 and A4 (denoted by A3+A4 and AR) can be measured and controlled to be suitable for the process. In an embodiment, such an amount of the fourth aqueous fraction A4 mixed with the at least part of the third aqueous A3 fraction that a pH of the mixture (A3+A4) of the at least part of the fourth aqueous fraction A4 and the at least part of the third aqueous fraction A3 is at least 5. More preferably, the pH of the mixture (A3+A4) is at least 6 or at least 6.5.

Referring to Figs. 3 and 4, the low pH of the third aqueous fraction A3 can be utilized in the separation of the product fraction PF and the second aqueous fraction A2. This applies particularly when a pH of the third aqueous fraction A3 is at most 3 to promote production of chlorine Cl₂ in the first cell 210. Typically, the non-polar phase (as discussed above) is insoluble to the polar phase (as discussed above) at least when pH is neutral or low. However, a pH of the intermediate product IP may be, in some cases, relatively high, which may hinder the separation of the product fraction PF and the second aqueous fraction A2 from the intermediate product IP. Therefore, to decrease the pH for the separation, at least a part of the third aqueous phase A3 can be used. Thus, an embodiment comprises utilising at least part of the third aqueous fraction A3 to improve the separation of the product fraction PF and the second aqueous fraction A2 from the intermediate product IP. In case the hydrothermal conversion reaction involves a high pH, the at least a part of the third aqueous fraction A3 can be supplied to the process to a location downstream from the hydrothermal conversion reaction. The at least a part of the third aqueous fraction A3 can be supplied to the separator 160, or upstream therefrom. Referring to Figs. 3 and 4, a corresponding device comprises a fourth pipeline 340 for conveying at least a part of the third aqueous fraction A3 to the rector 150, to a separator 160, or to a location that is between the reactor 150 and the separator 160 for utilising at least part of the third aqueous fraction A3 to improve the separation of the product fraction PF and the second aqueous fraction A2 from the intermediate product IP.

An embodiment comprises recycling a mixture of both (at least a part of) the third aqueous fraction A3 and (at least a part of) the fifth aqueous fraction A5 both to the reactor 150 and the separator 160. An embodiment comprises recycling at least a part of (only) the fifth aqueous fraction A5 to the reactor 150 and recycling at least a part of (only) the third aqueous fraction A3, which has a lower pH than the fifth aqueous fraction A5, to separator 160 for improving the separation of the product fraction PF and the second aqueous fraction A2 from the intermediate product IP.

Sometimes a quality of the product fraction PF as such is not sufficient for an intended use thereof. For example, the product fraction PF may comprise a lot of oxygen, which may pose problems if the product fraction PF stored for a long time because of internal oxidation. Therefore, the product fraction PF may be refined. The product fraction PF may be refined for example in a hydrodeoxygenation (HDO) process.

Referring to Fig. 3, it has been found that the hydrogen H₂ produced in the second cell 220 can be used for refining the product fraction PF. In the embodiment of Fig. 3, the product fraction PF and the hydrogen H₂ are conveyed to a refining reactor 170, wherein the product fraction PF and the hydrogen H₂ are allowed to react with each other. The refining process in the refining reactor 170 may be e.g. a hydrodeoxygenation (HDO) process. As well known, suitable catalysts may be used in such a process. Suitable catalysts for HDO include nikel-molybdenium (NiMo) and cobalt-molybdenium (CoMo). In HDO a temperature varies typically in the range of 200°C - 350°C and a pressure varies typically in the range of 50 bar - 150 bar.

However, also other refining processes involving H₂ can be applied to refine the product fraction PF. Moreover, the produced hydrogen need not be utilized for refining the product fraction PF. Thus, an embodiment comprise producing hydrogen H₂ in the second cell 220. A preferable embodiment comprises collecting or utilizing the hydrogen produced in the second cell 220.

An embodiment comprises allowing at least a part of the hydrogen H₂ produced in the second cell 220 to chemically react with the product fraction PF or a part thereof. As a result, a refined fraction RF is obtained. Reference is made to Fig. 3. Preferably, the at least a part of the hydrogen H₂ produced in the second cell 220 is allowed to chemically react with the product fraction PF in the presence of a catalyst, such as NiMo or CoMo or Na or K. More preferably the at least a part of the hydrogen H₂ produced in the second cell 220 is allowed to chemically react with the product fraction PF in a pressure that is in the range in the range of 50 bar - 150 bar and at a temperature that is in the range of 200°C - 350°C. A catalyst, such as one of the catalysts disclosed above, may be present also in these process conditions.

An embodiment of the device comprises a refining reactor 170, a second pipeline 320 configured to convey at least a part of the product fraction PF to the refining reactor 170, and a third pipeline 330 configured to convey at least part of the of the hydrogen H₂ produced in the second cell 220 to the second pipeline 320 or to the refining reactor 170. Concerning the former, the hydrogen may be premixed in the second pipeline 320 with the product fraction PF upstream from the refining reactor 170 (not shown). Concerning the latter, the hydrogen H₂ may be conveyed directly to the refining reactor 170 (see Fig. 3). The refining reactor 170 may be a HDO reactor. The refining reactor 170 may be configured to withstand a pressure of at least 150 bar and a temperature of at least 350 °C. The refining reactor 170 may contain catalyst configured to catalyse chemical reactions between the product fraction PF and the hydrogen H₂.

To make the separation of the product IP and the second aqueous fraction A2 easier, a temperature and a pressure of the intermediate product fraction IP may be lowered before the separation, or for the separation to occur. Thus, an embodiment comprises lowering a temperature of the intermediate product IP to the range of 25 - 200 °C and lowering a pressure in which the of the intermediate product IP is held to a range of 1 - 70 bar before or during separating the product fraction PF and the second aqueous fraction A2 from the intermediate product IP. At least a part of the third aqueous fraction A3 may be utilised, as detailed above. An embodiment comprises separating also carbon dioxide CO₂ from the intermediate product IP. Separation of carbon dioxide is shown in Fig. 4. However, even if not shown in other figures, separation of carbon dioxide can be applied in those embodiments, too.

As readable from the above, in the reactor 150, the temperature is high. Thus, at some point, the feedstock FS and the recyclable aqueous fraction AR need to be heated. Heating may be done in the reactor 150. In addition, to facilitate chemical reactions between the feedstock FS and the recyclable aqueous fraction AR, they need to be mixed with each other. The mixing, too, can be done in the reactor 150. Reference is made to Fig. 1.

However, the mixing may be done even if the materials are not hot, i.e. before heating. Referring to Figs. 6a to 6c, in such a case the device for running the method comprises a mixer 110 and the mixing may be performed in the mixer 110. As detailed therein, both the feedstock FS and the recyclable aqueous fraction AR are fed to the mixer 110, and input material IM or heated input material HIM for the rector is receivable from the mixer 110. Referring to Figs. 6a and 6b, the material(s) may be heated in the mixer 110, in a separate heater 120, or in the reactor 150.

In the embodiment of Fig. 6a, the feedstock FS and the recyclable aqueous fraction AR are fed to the mixer 110 to form input material IM for the reactor 150. However, the input material is, prior to feeding into the reactor 150, heated in a heater 120. Upon heating the input material IM, the heater 120 lets out heated input material HIM, which is conveyed to the reactor 150.

Fig 6b shows two embodiments in the same figure. In a first one of the embodiments of Fig. 6b, the feedstock FS and the recyclable aqueous fraction AR are fed to the mixer 110 wherein they are mixed, but not heated, to form input material IM for the reactor 150. The (non-heated) input material IM is fed to the reactor 150, wherein it is heated to facilitate the chemical reactions between the feedstock and the first aqueous fraction A1 comprising the recyclable aqueous fraction AR. In a second one of the embodiments of Fig. 6b, the feedstock FS and the recyclable aqueous fraction AR are fed to the mixer 110, wherein they are mixed and heated to form heated input material HIM for the reactor 150. The heated input material HIM is fed to the reactor 150, wherein the chemical reactions between the feedstock and the first aqueous fraction A1 comprising the recyclable aqueous fraction AR are facilitated, because the heated input material is sufficiently hot. Naturally, the material(s) may be heated in one, two, or all of: the mixer 110, the heater 120, and the reactor 150.

Therefore, in an embodiment of the method, the feedstock FS and the recyclable aqueous fraction AR are supplied to the reactor 150 by feeding the feedstock FS and the recyclable aqueous fraction AR to the mixer 110 and mixing the feedstock FS with the recyclable aqueous fraction AR in the mixer 110 to form an input material IM. Referring to Figs. 1 and 6a to 6c, the recyclable aqueous fraction AR may be supplied in the form of the first aqueous fraction A1, which comprises the recyclable aqueous fraction AR and may further comprise the make-up fraction A0 (see Fig. 1). The make-up fraction A0 may comprise of water or consist of water (fresh water or sea water).

Thereafter, the input material IM may be fed to the rector 150 without heating, as discussed above. Thus, an embodiment comprises feeding the input material IM to the reactor 150. However, prior to feeding to reactor 150, the input material IM may be heated (in the mixer 110 or in a heater 120) to form the heated input material HIM, whereby an embodiment comprises feeding the heated the input material HIM to the reactor 150.

In an embodiment, the input material is heated in a heater 120, which is separate from the reactor 150. Thus, an embodiment comprises heating the input material IM in a heater 120 to form heated input material HIM and feeding the thus heated input material HIM to the reactor 150.

Naturally, a heater 120 may be part of the reactor 150. In such a case, the input material IM may be fed to the heater 120 of the reactor 150 to form heated input material HIM, and the heated input material HIM may be conveyed, within the reactor 150 to a reaction zone 152 of the reactor 150. Reference is made to Fig. 6c, which shows a reactor 150 having an integrated heater 120 and a reaction zone 152.

As detailed above, the invention also relates to a use of an electrochemical purifier 200 as detailed above. The electrochemical purifier 200 is used for purifying an aqueous fraction, i.e. the second aqueous fraction A2 discussed above, which results from hydrothermal treatment of carbon-containing material. The electrochemical purifier 200 is used also for reducing content of chloride of the aqueous fraction to enable recycling of at least a part of the aqueous fraction to the hydrothermal treatment of the carbon-containing material. The electrochemical purifier 200 is used such that chlorine gas and/or hypochlorous acid is produced at the anode 212 of the electrochemical purifier 200.

## Claims

1. A method for hydrothermally treating feedstock (FS) comprising carbon-containing material, the method comprising
- supplying the feedstock (FS) and a first aqueous fraction (A1) to a reactor (150),
- holding the feedstock (FS) and the first aqueous fraction (A1) in the reactor (150) in a pressure and at a temperature to hydrothermally treat the feedstock (FS) for forming intermediate product (IP), wherein the pressure is in the range 50 - 400 bar and the temperature is in the range 250 - 500 °C,
- separating from the intermediate product (IP) a product fraction (PF) and a second aqueous fraction (A2), the separating comprising allowing phase-separation of polar compounds from non-polar compounds to form a non-polar phase and a polar phase, wherein the product fraction (PF) comprises the non-polar phase and the second aqueous fraction (A2) comprises the polar phase,
- conveying the second aqueous fraction (A2) to an electrochemical purifier (200) comprising
• a first cell (210) and an anode (212) arranged in the first cell (210),
• a second cell (220) and a cathode (222) arranged in the second cell (220), and
• a first ion-exchange membrane (211) arranged between the first cell (210) and the second cell (220),
- producing chlorine (Cl₂) and/or hypochlorous acid (HClO) in the first cell (210) of the electrochemical purifier (200) by applying a first voltage (V1) to the anode (212) and a second voltage (V2) to the cathode (222), wherein the first voltage (V1) is greater than the second voltage (V2, V1>V2), and
- utilising at least part of a third aqueous fraction (A3) to improve the separation of the product fraction (PF) and the second aqueous fraction (A2) from the intermediate product (IP), wherein the third aqueous fraction (A3) is arranged in the first cell (210).

2. The method of claim 1 comprising
- recycling at least a part of a recyclable aqueous fraction (AR) from the electrochemical purifier (200) to the reactor (150), wherein
- the recyclable aqueous fraction (AR) has a lower content of chloride (Cl⁻) than the second aqueous fraction (A2);
preferably the method comprises
- recycling at least a part of the third aqueous fraction (A3) to the reactor (150); more preferably, the method further comprises
- recycling at least a part of a fourth aqueous fraction (A4) from the second cell (220) to the reactor (150).

3. The method of the claim 1 or 2, comprising
- purifying the second aqueous fraction (A2) in the electrochemical purifier (200) such that a pH of a third aqueous fraction (A3) that is arranged in the first cell (210) is at most 3, preferably at most 2 and
- producing chlorine (Cl₂) in the first cell (210) by applying the first voltage (V1) and the second voltage (V2) to the anode (212) and the cathode (222), respectively.

4. The method of the claim 2 or 3, wherein
- the recyclable aqueous fraction (AR) comprises at least a part of the third aqueous fraction (A3) and at least a part of the fourth aqueous fraction (A4) such that a pH of the recyclable aqueous fraction (AR) is at least 5.

5. The method of any of the claims 1 to 4, comprising
- feeding at least a part of the second aqueous fraction (A2) to the first cell (210) and
- producing carbon dioxide (CO₂) in the first cell (210) by oxidizing a carbon-containing compound of the second aqueous fraction (A2) at the anode (212).

6. The method of any of the claims 1 to 5, wherein
- a/the third aqueous fraction (A3) is arranged in the first cell (210) and a/the fourth aqueous fraction (A4) is arranged in the second cell (220), the method comprising
- mixing the third aqueous fraction (A3) and/or mixing the fourth aqueous fraction (A4);
preferably the mixing comprises
- recycling a part of the third aqueous fraction (A3) to the first cell (210) and/or recycling a part of the fourth aqueous fraction (A4) to the second cell (220).

7. The method of any of the claims 1 to 6, comprising
- producing hydrogen (H₂) in the second cell (220);
preferably, the method comprises
- collecting or utilizing the hydrogen (H₂) produced in the second cell (220), for example by
- allowing at least a part of the hydrogen (H₂) produced in the second cell (220) to chemically react with at least a part of the product fraction (PF) to obtain a refined fraction (RF).

8. The method of any of the claims 1 to 7, comprising
- lowering a temperature of the intermediate product (IP) to 25 - 200 °C and a pressure in which the of the intermediate product (IP) is held to 1 - 70 bar before or during separating the product fraction (PF) and the second aqueous fraction (A2) from the intermediate product (IP).

9. The method of any of the claims 1 to 8, comprising
- applying the first voltage (V1) and the second voltage (V2) such that a density of the electric current running from the anode (212) to the cathode (222) is 1 to 50 Amperes per square metre, wherein
- the density of the electric current is calculated by dividing the electric current running from the anode (212) to the cathode (222) by an area of a surface of the anode (212).

10. The method of any of the claims 1 to 9, comprising
- heating the feedstock (FS) or the recyclable aqueous fraction (AR) or both the feedstock (FS) and the recyclable aqueous fraction (AR) upstream from the reactor (150) or in the reactor (150);
preferably, the feedstock (FS) and the recyclable aqueous fraction (AR) are the supplied to the reactor (150) by
- feeding the feedstock (FS) and the recyclable aqueous fraction (AR) to a mixer (110),
- mixing the feedstock (FS) with the recyclable aqueous fraction (AR) in the mixer (110) to form an input material (IM), and
- feeding the input material (IM) to the reactor (150).

11. A device for hydrothermally treating feedstock (FS) comprising carbon-containing material, the device comprising
- a reactor (150) configured to hold the feedstock (FS) and a first aqueous fraction (A1) in the reactor (150) in a pressure and at a temperature to hydrothermally treat the feedstock (FS) for forming intermediate product (IP), wherein
- the pressure is in the in the range 50 - 400 bar and the temperature is in the range 250 - 500 °C, and the device comprises
- a separator (160) configured to separate from the intermediate product (IP) a product fraction (PF) and a second aqueous fraction (A2),
- an electrochemical purifier (200) configured to receive the second aqueous fraction (A2), the electrochemical purifier (200) comprising
• a first cell (210) and an anode (212) arranged in the first cell (210),
• a second cell (220) and a cathode (222) arranged in the second cell (220),
• a first ion-exchange membrane (211) arranged between the first cell (210) and the second cell (220),
• an electric source (250) configured the generate a first voltage (V1) and a second voltage (V2), wherein the first voltage (V1) is greater than the second voltage (V2),
• a first electric conductor (214) configured to conduct the first voltage (V1) to the anode (212), and
• a second electric conductor (224) configured to conduct the second voltage (V2) to the cathode (224),
- a pipeline (340) for conveying at least a part of a third aqueous fraction (A3) arranged in the first cell (210) of the electrochemical purifier (200) to the separator (160) or to a location that is between the reactor (150) and the separator (160) for utilising at least part of the third aqueous fraction (A3) to improve the separation of the product fraction (PF) and the second aqueous fraction (A2) from the intermediate product (IP).

12. The device of claim 11, comprising
- a first pipeline (310) configured to recycle at least a part of a recyclable aqueous fraction (AR) from the electrochemical purifier (200) to the reactor (150) optionally through other components of the device.

13. The device of claim 11 or 12, comprising
- a heater (120) configured to heat the feedstock (FS) or the recyclable aqueous fraction (AR) or both the feedstock (FS) and the recyclable aqueous fraction (AR);
preferably the device further comprises
- a mixer (110), wherein
- a first part (311) of the first pipeline (310) is configured to recycle at least a part of the recyclable aqueous fraction (AR) from the electrochemical purifier (200) to the mixer (110) and
- a second part (312) of the first pipeline (310) is configured to convey input material (IM) or heated input material (HIM) from the mixer (110) to the reactor (150) optionally through other components of the device.

14. The method or the device of any of the claims 1 to 13,
- the first ion-exchange membrane (211) is an anion-exchange membrane (AEM) or a cation-exchange membrane (CEM).

15. The method or device of any of the claims 1 to 14, wherein
- the anode (212) comprises at least one of ruthenium (Ru), iridium (Ir), platinum (Pt), tin (Sn), lead (Pb), boron (B), iron (Fe), steel, nickel (Ni), and graphite;
preferably,
- the anode (212) comprises at least one of ruthenium oxide (RuO₂), iridium oxide (IrO₂), platinum (Pt), tin oxide (SnO₂), lead oxide (PbO₂), boron doped diamond (BDD), iron (Fe), steel, nickel (Ni), and graphite;
more preferably,
- the anode (212) comprises on its surface at least one of ruthenium (Ru), iridium (Ir), platinum (Pt), tin (Sn), lead (Pb), boron (B), iron (Fe), steel, nickel (Ni), and graphite;
even more preferably,
- the anode (212) comprises on its surface at least one of ruthenium oxide (RuO₂), iridium oxide (IrO₂), platinum (Pt), tin oxide (SnO₂), lead oxide (PbO₂), boron doped diamond (BDD) iron (Fe), steel, nickel (Ni), and graphite.
